# EUROPEAN PATENT SPECIFICATION

(11) **EP 2 585 768 B1**
(45) Date of publication and mention of the grant of the patent: **19.07.2017**
(21) Application number: 11798442.7
(22) Date of filing: 24.05.2011
(51) Int. Cl.: F24F 12/00, F24F 11/00

(54) **METHOD FOR CONTINUOUSLY REGULATING THE LEVEL OF THE COMPOUNDS FOR FREEZING POINT DEPRESSION IN ENERGY SYSTEM, SUCH AS HEAT RECOVERY SYSTEMS IN BUILDINGS**
VERFAHREN ZUR KONTINUIERLICHEN REGELUNG DES PEGELS VON VERBINDUNGEN ZUR GEFRIERPUNKTSENKUNG IN EINEM STROMSYSTEM, Z.B. EINEM WÄRMERÜCKGEWINNUNGSSYSTEM IN EINEM GEBÄUDE
PROCÉDÉ DE RÉGULATION CONTINUE DE LA TENEUR DE COMPOSÉS D'ABAISSEMENT DU POINT DE CONGÉLATION DANS UN SYSTÈME ÉNERGÉTIQUE, TEL QU'UN SYSTÈME DE RÉCUPÉRATION DE CHALEUR DANS UN BÂTIMENT

(30) Priority: 23.06.2010 SE 1050680
(43) Date of publication of application: 01.05.2013
(73) Proprietor: QTF Sweden AB, 393 53 Kalmar (SE)
(72) Inventor: CARLSSON, Björn, S-392 43 Kalmar (SE)
(74) Representative: Örtenblad, Bertil Tore
(86) International application number: PCT/SE2011/050644
(87) International publication number: WO 2011/162669

(56) References cited:
- SE-C2- 532 015
- US-A1- 2006 185 383
- US-A1- 2007 029 685

## Description

The present invention relates to a method for removing compounds for freezing point depression in energy systems, such as heat recovery systems in buildings. The documents SE 532 015 C2, US 2006/185383 A1 and US 2007/029685 A1 disclose heat recovery systems. Heat recovery systems for buildings are available, in which air leaves the building through a heat exchanger in which the heat of the air is withdrawn and used to heat water, which heated water is led to a heat exchanger in which its heat is withdrawn and used to heat external air, which is introduced into the building. The water is pumped around in a circuit that contains the two heat exchangers. When the weather is cold and the external temperature below zero degrees Celsius, it would be possible for the water in the heat exchanger into which external air is fed to freeze. A compound for freezing point depression is for this reason added to the water. One compound for freezing point depression is ethylene glycol. In Stockholm, Sweden, for example, ethylene glycol is added to the water in such an amount that a depression of the freezing point to -18 degrees Celsius is obtained. Another compound for freezing point depression is alcohol.

A major disadvantage of ethylene glycol is that the heat transfer in the heat exchangers falls when glycol has been mixed into the water. It is therefore desirable that the added glycol be removed when the outdoor temperature rises. The present invention offers a very simple method of removing glycol from the water. Glycol can, according to the invention, be continuously removed during operation of the heat recovery system. In this way, it is possible to remove only a certain amount of the glycol, such that the depression of the freezing point is adapted to the actual outdoor temperature.

The present invention thus relates to a method for removing compounds for freezing point depression in an energy system, such as a heat recovery system in a building, which heat recovery system comprises a first circuit with process water and a first heat exchanger in order to remove heat from warm air that is leaving the building and using the heat to heat the process water, and a second heat exchanger in order to remove heat from the water that has been heated in the first heat exchanger and use the heat to heat colder outdoor air, which first circuit comprises a pump for pumping the process water around in the circuit, where a compound for freezing point depression is added when necessary to the process water, where a fraction of the process water from the first circuit is withdrawn to a second circuit that is connected in parallel with the said first circuit and that comprises a pump and an ejector in order to achieve negative pressure, and it is characterised in that the process water that is removed is led away in a line through a valve to an evaporation tank that is connected to the low-pressure side of the said ejector, in that water is separated in the evaporation tank from the compound for freezing point depression, in that the water from the evaporation tank is caused to be led to the low-pressure side of the ejector, and in that the compound for freezing point depression that has been separated in the evaporation tank is led to a storage tank for the compound for freezing point depression and that, when higher levels of the compound for freezing point depression are necessary in the first circuit, the compound for freezing point depression in the storage tank is caused to be led to the ejector through a stop valve.

The invention is described in more detail below, partly in association with embodiments of the invention shown in the attached drawings, where
- Figure 1 shows a flow diagram for the removal from a heat recovery system of a compound for freezing point depression that has a higher boiling point than that of water
- Figure 2 shows a flow diagram for the removal from a heat recovery system of a compound for freezing point depression that has a lower boiling point than that of water.

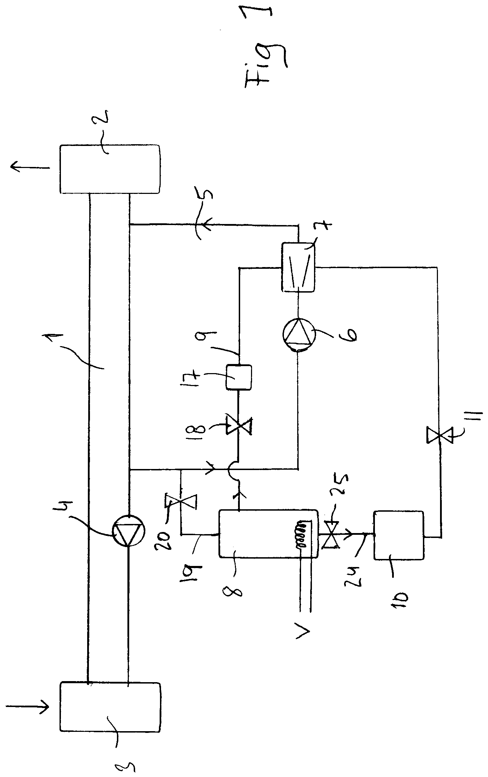

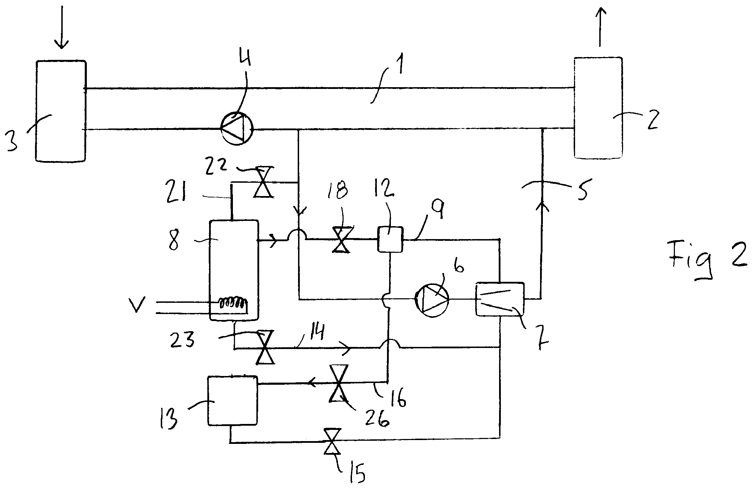

Figures 1 and 2 illustrate the present method to remove compounds for freezing point depression in a heat recovery system in a building. The heat recovery system comprises a first circuit 1 with process water and a first heat exchanger 2 to remove heat from warm air that is leaving the building and transferring it to process water, and a second heat exchanger 3 to remove heat from the water that has been heated in the first heat exchanger and transfer it to colder outdoor air. The first circuit comprises a pump 4 for pumping process water around the circuit. A compound for freezing point depression is added to the process water when necessary. A fraction of the process water from the first circuit 1 is led to a second circuit 5 that is connected in parallel with the said first circuit 1 and that comprises a pump 6 and an ejector 7 in order to achieve negative pressure.

According to the invention, the separated process water is led in a line 19; 20 through a valve 20; 22 to an evaporation tank 8 that is connected to the low-pressure side of the said ejector 7 through a line 9. The water is separated from the compound for freezing point depression in the evaporation tank 8 through the water being vaporised. Water in the form of water vapour from the evaporation tank is caused to be led to the low-pressure side of the ejector 7. Thus the water vapour will condense against the water from the second circuit 5 that flows through the ejector 7. The water vapour may be precondensed in an intermediate condenser 17.

The compound for freezing point depression that has been separated in the evaporation tank 8 is led to a storage tank 10 for the compound for freezing point depression.

When necessary, the compound for freezing point depression in the storage tank 10 is caused to be led to the ejector 7 through a stop valve 11, whereby the compound for freezing point depression is fed out into the said first circuit 1.

In the case in which the compound for freezing point depression has a higher boiling point than that of water, see Figure 1, the invention is characterised in that water that has been vaporised in the evaporation tank 8 is led through the line 9, which constitutes the said connection between the evaporation tank 8 and the low-pressure side of the ejector 7, and in that the compound for freezing point depression that remains in the evaporation tank 8 is led through a line 24 through a valve 25 to the storage tank 10 for the compound for freezing point depression, and in that, when necessary, the compound for freezing point depression in the storage tank 10 is caused to be led to the ejector 7 through the stop valve 11. An example of such a compound is ethylene glycol.

When the compound for freezing point depression is to be added to the said first circuit 1, a valve in the line 9 that runs between the evaporation tank 8 and the low-pressure side of the ejector is closed.

In the case in which the compound for freezing point depression has a lower boiling point than that of water, see Figure 2, the invention is characterised in that the compound for freezing point depression that has been separated in the evaporation tank 8 is led through the line 9, which constitutes the said connection between the evaporation tank 8 and the low-pressure side of the ejector 7, in that the compound for freezing point depression is caused to condense in a condenser 12, in that the condensate is caused to be led to a storage tank 13 through a line 16 and a valve 26, and in that separated water in the evaporation tank 8 is led to the low-pressure side of the ejector 7 through a valve 23 in a line 14, and in that, when necessary, the compound for freezing point depression in the storage tank 13 is caused to be led to the ejector through a stop valve 15.

An example of such a compound is alcohol.

When the compound for freezing point depression is to be added to the said first circuit 1, a valve 18 in the line 9 that runs between the evaporation tank 8 and the low-pressure side of the ejector is closed.

According to one preferred embodiment, the pressure before the ejector is between 3 and 6 bar and the pressure on the low-pressure side of the ejector is between 0.05 and 0.4 bar. The pressure in the first circuit 1 may be approximately 2 bar.

According to a second preferred embodiment, the process water in the evaporation tank is caused to be heated to at least 50 °C, in order in this way to accelerate the evaporation process in the evaporation tank 8.

As the description given above makes obvious, the present method makes it possible for compounds for freezing point depression to be both easily removed and easily added to the said first circuit. This means that it is possible to add as much of the compound for freezing point depression as is necessary, taking into consideration the actual outdoor temperature. It is, therefore, possible by continuously regulating the level of the compound for freezing point depression to have all the time as good heat transfer as possible in the heat exchangers 2, 3.

Thus, the present invention solves the problem described in the introduction.

A number of embodiments have been described above. The invention, however, is not limited to a heat recovery system with the design that is shown. The invention can be used, for example, with a borehole heat exchanger and with other energy systems. The invention, therefore, is not limited to any particular energy system.

Furthermore, the drawings in Figures 1 and 2 show only schematic designs of the arrangements. The invention can, in addition, be applied with compounds for freezing point depression and other compounds for freezing point depression than ethylene glycol and alcohol.

Thus the present invention can be varied. The present invention is, therefore, not to be considered to be limited to the embodiments specified above but can be varied within the scope specified by the attached patent claims.

## Claims

1. A method for removing compounds for freezing point depression in a heat recovery system in a building, which heat recovery system comprises a first circuit (1) with process water and a first heat exchanger (2) in order to remove heat from warm air that is leaving the building and using the heat to heat the process water, and a second heat exchanger (3) in order to remove heat from the water that has been heated in the first heat exchanger (2) and use the heat to heat colder outdoor air, which first circuit (1) comprises a pump (4) for pumping the process water around the circuit, where a compound for freezing point depression is added as necessary to the process water, where a fraction of the process water from the first circuit (1) is withdrawn to a second circuit (5) that is connected in parallel with the said first circuit and that comprises a pump (6) and an ejector (7) in order to achieve negative pressure, **characterised in that** the process water that is removed is led away in a line (19; 20) through a valve (20; 22) to an evaporation tank (8) that is connected to the low-pressure side of the said ejector (7), **in that** water is separated in the evaporation tank (8) from the compound for freezing point depression, **in that** the water from the evaporation tank (8) is caused to be led to the low-pressure side of the ejector (7), and **in that** the compound for freezing point depression that has been separated in the evaporation tank is led to a storage tank (10; 13) for the compound for freezing point depression and **in that**, when higher levels of the compound for freezing point depression are necessary in the first circuit, the compound for freezing point depression in the storage tank (10; 13) is caused to be led to the ejector (7) through a stop valve (11; 15).

2. A method according to claim 1, in the case in which the compound for freezing point depression has a higher boiling point than that of water, **characterised in that** water that has been vaporised in the evaporation tank (8) is led through the line (9), which constitutes the said connection between the evaporation tank (8) and the low-pressure side of the ejector (7), and **in that** the compound for freezing point depression that remains in the evaporation tank (8) is led through a valve (25) to a storage tank (10) for the compound for freezing point depression, and **in that**, when necessary, the compound for freezing point depression in the storage tank (10) is caused to be led to the ejector (7) through a stop valve (11).

3. A method according to claim 1, in the case in which the compound for freezing point depression has a lower boiling point than that of water, **characterised in that** the compound for freezing point depression in the evaporation tank (8) is led through a line (9), which constitutes the said connection between the evaporation tank (8) and the low-pressure side of the ejector (7), **in that** the compound for freezing point depression is caused to condense in a condenser (12), **in that** the condensate is led to a storage tank (13) through a valve (26), and **in that** separated water in the evaporation tank (8) is led to the low-pressure side of the ejector (7), and **in that**, when necessary, the compound for freezing point depression in the storage tank (13) is caused to be led to the ejector through a stop valve (15).

4. A method according to claim 1, 2 or 3, **characterised in that** the pressure before the ejector (7) is between 3 and 6 bar and that the pressure on the low-pressure side of the ejector is between 0.05 and 0.4 bar.

5. A method according to claim 1, 2, 3 or 4, **characterised in that** the process water in the evaporation tank (8) is caused to be heated to at least 50 °C.

## Patentansprüche

1. Verfahren zum Entfernen von Verbindungen zur Gefrierpunktsenkung in einem Wärmerückgewinnungssystem in einem Gebäude, dessen Wärmerückgewinnungssystem einen ersten Kreislauf (1) mit Prozesswasser und einen ersten Wärmetauscher (2) umfasst, um die Wärme aus warmer Luft zu entfernen, welche das Gebäude verlässt und unter Verwendung der Wärme, um das Prozesswasser zu erwärmen, sowie einen zweiten Wärmetauscher (3) umfasst, um Wärme aus dem Wasser zu entfernen, welches im ersten Wärmetauscher (2) erhitzt wurde und Verwendung der Wärme, um die kältere Außenluft zu erwärmen, deren erster Kreislauf (1) eine Pumpe (4), um Prozesswasser um den Kreislauf (1) herum zu pumpen, wobei eine Verbindung zur Gefrierpunktsenkung dem Prozesswasser als notwendig beigegeben wird, wobei ein Bruchteil des Prozesswassers aus dem ersten Kreislauf (1) zu einem zweiten Kreislauf (5) zurückgezogen wird, der parallel zum ersten Kreislauf geschaltet ist und der eine Pumpe (6) und einen Ejektor (7) umfasst, um einen Unterdruck zu erzielen, **dadurch gekennzeichnet, dass** das entfernte Prozesswasser in einer Linie (19; 20) durch ein Ventil (20; 22) zu einem Verdampfungstank (8) in einer Linie abgeführt wird, welcher mit der Unterdruckseite besagten Ejektors (7) verbunden ist, und dass dieses Wasser im Verdampfungstank (8) von der Verbindung zur Gefrierpunktsenkung getrennt wird, und dass das Wasser aus dem Verdampfungstank (8) dazu gebracht wird zur Unterdruckseite des Ejektors (7) geleitet zu werden, und dass die Verbindung zur Gefrierpunktsenkung, welche im Verdampfungstank getrennt wurde, zu einem Speichertank (10; 13) für die Verbindung zur Gefrierpunktsenkung geleitet wird, und dass wenn höhere Anteile an Verbindungen zur Gefrierpunktsenkung im ersten Kreislauf notwendig sind, die Verbindung für die Gefrierpunktsenkung im Speichertank (10; 13) dazu gebracht wird zum Ejektor (7) durch ein Sperrventil (11; 15) geleitet zu werden.

2. Verfahren gemäß Anspruch 1, in welchem Fall die Verbindung zur Gefrierpunktsenkung einen höheren Siedepunkt hat als der des Wassers hat, **dadurch gekennzeichnet, dass** das im Verdampfungstank (8) verdampfte Wasser durch die Linie (9) geleitet wird, welche besagte Verbindung zwischen dem Verdampfungstank (8) und der Unterdruckseite des Ejektors (7) darstellt, und dass die Verbindung zur Gefrierpunktsenkung, welche im Verdampfungstank (8) bleibt, durch ein Ventil (25) in einen Speichertank (10) für die Verbindung zur Gefrierpunktsenkung geleitet wird, und dass, falls nötig, die Verbindung zur Gefrierpunktsenkung im Speichertank (10) dazu veranlasst wird zum Ejektor (7) durch ein Sperrventil (11) geleitet zu werden.

3. Verfahren gemäß Anspruch 1, in welchem Fall die Verbindung zur Gefrierpunktsenkung einen niedrigeren Siedepunkt hat als der des Wassers, **dadurch gekennzeichnet, dass** die Verbindung zur Gefrierpunktsenkung im Verdampfungstank (8) durch eine Linie (9) geleitet wird, welche die besagte Verbindung zwischen dem Verdampfungstank (8) und der Unterdruckseite des Ejektors (7) darstellt, und dass die Verbindung zur Gefrierpunktsenkung dazu veranlasst wird, in einem Kondensator (12) zu kondensieren, und dass das Kondensat zu einem Speichertank (13) durch ein Ventil (26) geleitet wird, und dass dieses getrennte Wasser im Verdampfungstank (8) zur Unterdruckseite des Ejektors (7) geleitet wird, und dass, falls nötig, die Verbindung zur Gefrierpunktsenkung im Speichertank (13) dazu gebracht wird zum Ejektor durch ein Sperrventil (15) geleitet zu werden.

4. Verfahren gemäß Ansprüchen 1, 2 oder 3, **dadurch gekennzeichnet, dass** der Druck vor dem Ejektor (7) zwischen 3 und 6 bar beträgt, und dass der Druck auf der Unterdruckseite des Ejektors zwischen 0,05 und 0,4 bar beträgt.

5. Verfahren gemäß Anspruch 1, 2, 3 oder 4, **dadurch gekennzeichnet, dass** das Prozesswasser im Verdampfungstank (8) dazu gebracht wird auf mindestens 50° C erhitzt zu werden.

## Revendications

1. - Procédé pour retirer des composés d'abaissement du point de congélation dans un système de récupération de chaleur dans un bâtiment, lequel système de récupération de chaleur comprend un premier circuit (1) avec de l'eau de procédé et un premier échangeur de chaleur (2) afin de retirer de la chaleur de l'air chaud qui quitte le bâtiment et d'utiliser la chaleur pour chauffer l'eau de procédé, et un second échangeur de chaleur (3) afin de retirer de la chaleur de l'eau qui a été chauffée dans le premier échangeur de chaleur (2) et d'utiliser la chaleur pour chauffer de l'air extérieur plus froid, lequel premier circuit (1) comprend une pompe (4) pour pomper l'eau de procédé le long du circuit, un composé d'abaissement du point de congélation étant ajouté si nécessaire à l'eau de procédé, une fraction de l'eau de procédé provenant du premier circuit (1) étant soutirée d'un second circuit (5) qui est relié en parallèle audit premier circuit et qui comprend une pompe (6) et un éjecteur (7) afin d'obtenir une pression négative, **caractérisé par le fait que** l'eau de procédé qui est retirée est acheminée dans une conduite (19 ; 20) par l'intermédiaire d'une vanne (20 ; 22) à un réservoir d'évaporation (8) qui est relié au côté basse pression dudit éjecteur (7), **par le fait que** de l'eau est séparée dans le réservoir d'évaporation (8) vis-à-vis du composé d'abaissement du point de congélation, **par le fait que** l'eau provenant du réservoir d'évaporation (8) est amenée à être acheminée au côté basse pression de l'éjecteur (7), et **par le fait que** le composé d'abaissement du point de congélation qui a été séparé dans le réservoir d'évaporation est acheminé à un réservoir de stockage (10 ; 13) pour le composé d'abaissement du point de congélation, lorsque des niveaux plus élevés du composé d'abaissement du point de congélation sont nécessaires dans le premier circuit le composé d'abaissement du point de congélation dans le réservoir de stockage (10 ; 13) est amené à être acheminé à l'éjecteur (7) par l'intermédiaire d'une vanne d'arrêt (11 ; 15).

2. - Procédé selon la revendication 1, dans le cas dans lequel le composé d'abaissement du point de congélation a un point d'ébullition supérieur à celui de l'eau, **caractérisé par le fait que** de l'eau qui a été évaporée dans le réservoir d'évaporation (8) est acheminée à travers la conduite (9), qui constitue ledit raccordement entre le réservoir d'évaporation (8) et le côté basse pression de l'éjecteur (7), et **par le fait que** le composé d'abaissement du point de congélation qui reste dans le réservoir d'évaporation (8) est acheminé par l'intermédiaire d'une vanne (25) à un réservoir de stockage (10) pour le composé d'abaissement du point de congélation, et **par le fait que**, si nécessaire, le composé d'abaissement du point de congélation dans le réservoir de stockage (10) est amené à être acheminé à l'éjecteur (7) par l'intermédiaire d'une vanne d'arrêt (11).

3. - Procédé selon la revendication 1, dans le cas dans lequel le composé d'abaissement du point de congélation a un point d'ébullition inférieur à celui de l'eau, **caractérisé par le fait que** le composé d'abaissement du point de congélation dans le réservoir d'évaporation (8) est acheminé à travers une conduite (9), qui constitue ledit raccordement entre le réservoir d'évaporation (8) et le côté basse pression de l'éjecteur (7), **par le fait que** le composé d'abaissement du point de congélation est amené à se condenser dans un condenseur (12), **par le fait que** le condensat est acheminé à un réservoir de stockage (13) par l'intermédiaire d'une vanne (26), et **par le fait que** de l'eau séparée dans le réservoir d'évaporation (8) est acheminée au côté basse pression de l'éjecteur (7), et **par le fait que**, si nécessaire, le composé d'abaissement du point de congélation dans le réservoir de stockage (13) est amené à être acheminé à l'éjecteur par l'intermédiaire d'une vanne d'arrêt (15).

4. - Procédé selon la revendication 1, 2 ou 3, **caractérisé par le fait que** la pression avant l'éjecteur (7) est entre 3 et 6 bars et que la pression sur le côté basse pression de l'éjecteur est entre 0,05 et 0,4 bar.

5. - Procédé selon la revendication 1, 2, 3 ou 4, **caractérisé par le fait que** l'eau de procédé dans le réservoir d'évaporation (8) est amenée à être chauffée à au moins 50°C.
